(19) Europäisches Patentamt
European Patent Office
Office européen des brevets

(11) Veröffentlichungsnummer: **0 222 980 A2**

(12) **EUROPÄISCHE PATENTANMELDUNG**

(21) Anmeldenummer: 86110725.8

(51) Int. Cl.⁴: **C08G 73/16**

(22) Anmeldetag: 02.08.86

(30) Priorität: 19.10.85 DE 3537230

(43) Veröffentlichungstag der Anmeldung: 27.05.87 Patentblatt 87/22

(84) Benannte Vertragsstaaten: DE FR GB IT

(71) Anmelder: HÜLS AKTIENGESELLSCHAFT
Patentabteilung / PB 15 - Postfach 13 20
D-4370 Marl 1(DE)

(72) Erfinder: Bartmann, Martin, Dr.
Burgstrasse 35
D-4350 Recklinghausen(DE)
Erfinder: Seeliger, Wolfgang, Dr.
Leunaer Strasse 21
D-4370 Marl(DE)

(54) **Polyesterimide und Verfahren zu ihrer Herstellung.**

(57) Die Erfindung betrifft ein Verfahren zur Herstellung von Polyesterimiden der Formel I

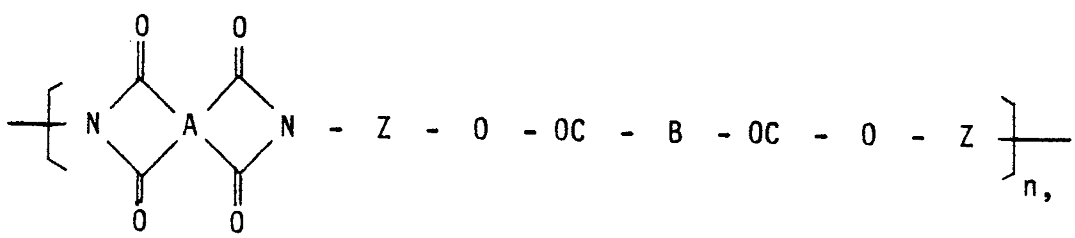

durch Umsetzung von Tetracarbonsäuredianhydriden der Formel II

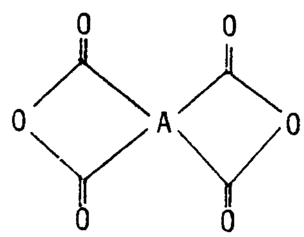

mit N,N'-Bis(Omega-hydroxyalkyl)dicarbonsäurediamiden der Formel HO -Z -NH -CO -B -CO -NH -Z -OH (III).
Dabei ist
-A ein vierwertiger aromatischer Rest mit 6 bis 32 C-Atomen, der bis zu 40 % durch einen vierwertigen aliphatischen Rest mit bis zu 16 C-Atomen ersetzt sein kann,
- B ein zweiwertiger aliphatischer oder aromatischer Rest mit bis zu 14 C-Atomen,
-Z ein Alkylenrest mit 2 bis 3 C-Atomen und
-n eine Zahl zwischen 3 und 500

EP 0 222 980 A2

# Polyesterimide und Verfahren zu ihrer Herstellung

Aufgrund der hohen Wärmeformbeständigkeit und der günstigen Eigenschaftskombination von Polyestern und Polyimiden sind die Polyesterimide der allgemeinen Formel I von großem technischen Interesse - (bezüglich der Formeln I -X siehe Seite 12 und 13). Es gibt jedoch bisher kein attraktives Verfahren zur Herstellung dieser Polymerklasse. Die Anwendung von Polyesterimiden der Formel I ist daher auf geringe Versuchsmengen beschränkt.

In der japanischen Patentanmeldung JP-OS 84/120 632 wird ein dreistufiges Verfahren zur Herstellung von Polyesterimiden der Formel VIII beschrieben. Danach setzt man zunächst ein Tetracarbonsäuredianhydrid der Formel II mit einem Aminoalkohol der Formel IV zur entsprechenden Diamiddicarbonsäure (V) um. Danach kondensiert man diese mit Dicarbonsäuredichloriden (VI) zu Polyamidcarbonsäureestern der allgemeinen Formel VII und dehydratisiert im dritten Schritt die Polyamidsäureester zu den Polyesterimiden der Formel VIII (siehe Seite 12 und 13). Dieses Verfahren ist aufwendig, da es nicht nur 3 Stufen sondern auch den Einsatz der schwer handhabbaren Dicarbonsäuredichloride erfordert. Zudem sind eine Reihe von störenden Nebenreaktionen möglich, die nur unter strenger Einhaltung der Reaktionsbedingungen weitgehend ausgeschlossen werden können. Ein besonderer Nachteil stellt die Verwendung der Säuredichloride dar, da es durch Bildung von HCl zur Produktschädigung kommen kann.

Es war andererseits aus der DE-OS 12 57 778 bekannt (siehe Seite 13), N-2-Acyloxyethylphthalimide der allgemeinen Formel X, wobei $R_1$ ein Wasserstoffatom, ein Alkyl-oder Phenylrest darstellt, durch Umsetzung von Phthalsäureanhydrid mit 2-Hydroxyethylcarbonsäureamiden der allgemeinen Formel IX herzustellen. Für den Fachmann ist es überraschend, daß die primäre Amidbindung in diesem Fall so glatt gebrochen wird und daß sich nebeneinander die Struktur eines sekundären Amids und eines Esters ausbildet. Es war nicht zu erwarten, daß sich diese Umamidierungsreaktion ebenso glatt auf difunktionelle Verbindungen wie III übertragen lassen würde, da hierfür ein vollkommen einheitlicher Reaktionsablauf Voraussetzung ist.

Es wurde jetzt überraschend gefunden, daß man die Polyesterimide der Formel I durch Umsetzung von Tetracarbonsäuredianhydriden der Formel II mit N,N'-Bis(Omega-hydroxyalkyl)dicarbonsäurediamiden der Formel III tasächlich herstellen kann. Entscheidend ist, daß man das sich bildende Reaktionswasser entfernt und dafür sorgt, daß die Umsetzung zumindest gegen Ende bei einer Temperatur zwischen 150 und 300 °C durchgeführt wird. Weitere bevorzugte Ausführungen des Verfahrens sind in den Ansprüchen 2 bis 9 niedergelegt. Gegenstand der vorliegenden Erfindung sind ferner die nach diesem Verfahren hergestellten Polyesterimide der Formel I.

Geeignete Tetracarbonsäuredianhydride (II) sind aromatische Verbindungen mit zwei Anhydridgruppen, die sich beispielsweise vom Benzol, Benzophenon, Biphenyl, Diphenylether sowie Bisphenol-A-Verbindungen ableiten.

Bevorzugt sind:

Pyromellitsäuredianhydrid
3,3',4,4'-Benzophenontetracarbonsäuredianhydrid
3,3',4,4'-Biphenyltetracarbonsäuredianhydrid
3,3',4,4'-Diphenylethertetracarbonsäuredianhydrid
2,2-Bis/4-(3,4-dicarboxyphenoxy)phenyl/propandianhydrid
4,4-Bis(3,4-dicarboxyphenoxy)diphenylsulfiddianhydrid

sowie deren Mischungen. Bis zu 40 % dieser aromatischen Anhydride können durch aliphatische Tetracarbonsäuredianhydride mit bis zu 12 C-Atomen ersetzt sein.

Beispielhaft seien genannt 1,2,3,4-Butantetracarbonsäuredianhydrid und Cyclopentantetracarbonsäuredianhydrid.

Geeignete N,N'-Bis(Omega-hydroxyalkyl)dicarbonsäurediamide III umfassen Diamide, deren Alkylenrest 2 bis 3 C-Atome aufweist. Die zugrunde liegende Dicarbonsäure kann entweder aliphatischer oder aromatischer Natur sein und bis zu 16 C-Atome aufweisen.

Bevorzugt sind folgende Diamide:

N,N-Bis(2-hydroxyethyl)isophthalsäurediamid
N,N-Bis(2-hydroxyethyl)terephthalsäurediamid
N,N-Bis(3-Hydroxypropyl)isophthalsäurediamid
N,N-Bis(2-hydroxyethyl)adipinsäurediamid
N,N-Bis(3-hydroxypropyl)adipinsäurediamid
N,N-Bis(2-hydroxyethyl)decandicarbonsäurediamid
N,N-Bis(2-hydroxyethyl)-5-tert.-butylisophthalsäurediamid

sowie deren Gemische
Die Diamide sind auf einfache Weise durch Umsetzung der entsprechenden Dicarbonsäuren bzw. ihrer Ester mit Alkanolaminen erhältlich.
Im experimentellen Teil ist die Herstellung eines Diamids beispielhaft angegeben.

Die Umsetzung der Diamide III mit den Anhydriden IV führt man in einem polaren Reaktionsmedium bei Temperaturen bis zu 300 °C und vorzugsweise bei Feststoffkonzentrationen zwischen 5 und 50 Gewichtsprozent durch.

Als Reaktionsmedium verwendet man polare aprotische Lösemittel wie z. B. Dimethylsulfoxid (DMSO), Tetrahydrothiophendioxid (Sulfolan), Nitrobenzol, N-Methylpyrrolidon (NMP), Dimethylacetamid (DMA) oder Diphenylsulfon oder deren Mischungen mit unpolaren organischen Lösemitteln wie Toluol, Xylol, Chlorbenzol, Dichlorbenzol, Anisol und Diphenylether, wobei der Anteil der letzteren maximal 80 Gewichtsprozent beträgt.

Der Mechanismus dieser neuen Polymerbildungsreaktion ist im einzelnen noch ungeklärt. Wie das unter speziellen Bedingungen (s.u.) gefundene Auftreten einer isolierbaren polymeren Vorstufe mit Amid-, Ester-und Säure-Funktionen andeutet, erfolgt die Bildung der Produkte der Formel I vermutlich primär durch Reaktion der OH-Gruppe des Hydroxyalkylamids mit der Anhydridgruppierung, gefolgt von einer überraschenderweise streng intramolekularen Umlagerung unter Abspaltung von Wasser.

Man kann die Reaktion entweder bei Temperaturen zwischen 150 °C und 300 °C durchführen oder zunächst bei niedrigeren Temperaturen (20 -150 °C) starten und zu Ende der Reaktion auf über 150 °C erwärmen.

Setzt man die Anhydride II und die Diamide III bei Temperaturen zwischen 20 und 150 °C, bevorzugt zwischen 50 und 120 °C, in Lösung um, so erhält man zunächst Polymere mit Amid-, Ester-und Säure-Funktionen, die gegebenenfalls durch Fällung mittels Zugabe eines Antilösemittels isoliert werden können. In einem zweiten Schritt werden diese Polymere in fester Form oder in Lösung durch Erhöhung der Reaktionstemperatur auf Temperaturen zwischen 150 °C und 300 °C, bevorzugt zwischen 170 °C und 270 °C, in die Polyesterimide der Formel I umgewandelt.

Setzt man die Verbindungen vom Typ II und III bei Temperaturen zwischen 150 °C und 300 °C, bevorzugt zwischen 170 °C und 270 °C, in einem Schritt um, so erhält man direkt Lösungen der Polyesterimide der Formel I. Die Reaktionszeiten liegen in der Regel zwischen 1 und 12 Stunden.

Zur Herstellung von hochmolekularen Produkten ist es notwendig, das sich während der Reaktion bildende Wasser aus dem Reaktionsgemisch zu entfernen. Es gibt verschiedene Möglichkeiten, um dies zu erreichen. So kann man beispielsweise ein Inertgas wie Stickstoff oder Argon durch oder über das Reaktionsmedium leiten. Es kann auch Vakuum angelegt und/oder durch (Azeotrop) Destillation ein Teil des Lösemittels zusammen mit dem Wasser entfernt werden.

Die Reaktion kann in Gegenwart von Katalysatoren durchgeführt werden. Dabei kommen zwei Typen von Katalysatoren infrage:

1. Verbindungen, die imstande sind, die Umsetzung von Alkoholen mit Anhydriden zu katalysieren, wie
-Säuren, z. B. Schwefelsäure, Methansulfonsäure, Toluolsulfonsäure
-Basen, z. B. Triethylamin, Pyridin, 4-Dialkylaminopyridine
-Metallverbindungen, z. B. Zinn, Zinnoxid, Dibutylzinnoxid, Zinkchlorid, Zinkacetat, Natriumacetat.

2. Verbindungen, die imstande sind, die Imidisierung von Carbonsäureamiden zu katalysieren, wie z. B. Triethylamin, gegebenenfalls zusammen mit Dicarbonsäureanhydriden, ein Gemisch aus Pyridin und Dicarbonsäureanhydird, ein Gemisch aus Alkaliacetat und Acetanhydrid.

An Ende der Polymerbildungsreaktion erhält man eine mehr oder weniger viskose Lösung oder eine Suspension des Polymeren im eingesetzten Lösemittel bzw. Lösemittelgemisch. Die Isolierung der Polyesterimide ist nicht kritisch: sie können entweder direkt weiterverarbeitet werden (z. B. zur Herstellung von Überzügen) oder gegebenenfalls nach Verdünnung durch Zugabe von Antilösemitteln gefällt werden.

Als Antilösemittel kommen niedrige Alkohole, wie z. B. Methanol, Ethanol, Isopropanol, Ketone wie z. B. Aceton, Methylethylketon oder Wasser und deren Mischungen in Frage. Die folgenden Beispiele sollen das erfindungsgemäße Verfahren näher erläutern, ohne es jedoch einschränken zu wollen.

EXPERIMENTELLER TEIL

A. Herstellung von N,N'-Bis(Omega-hydroxyethyl)-terephthalsäurediamid

Beispiel 1

Einsatzstoffe:97,1 g Terephthalsäuredimethylester
64,13g Ethanolamin

Durchführung:

Die Mischung der Einsatzstoffe wird unter Rühren im 2 l-Rundkolben auf 120 °C aufgeheizt. Unter Abspaltung von Methanol bildet sich eine klare Schmelze, die beim weiteren Aufheizen auf 150 °C erstarrt. Man legt nach 30 Minuten ein Vakuum von 10 mbar an und entfernt auf diese Weise innerhalb von 60 Minuten die leicht flüchtigen Komponenten des Reaktionsgemisches. Der Rückstand wird aus 1,5 l Wasser umkristallisiert.
Ausbeute = 119 g (90 % der Theorie)
Schmelzpunkt = 232 °C

B. Herstellung der Polyesterimide I

Beispiel 2

Einsatzstoffe:18,2 g N,N'-Bis(2-hydroxyethyl)isophthalsäurediamid (BHID)
15,75 g Pyromellitsäuredianhydrid (PMDA)
150 g Sulfolan
30 g Chlorbenzol

Durchführung:

In einem Rührkolben mit Stickstoffeinlaß und Destillationsaufsatz legt man unter Überleiten von Stickstoff (20 l/h) bei 165 °C die Lösung von BHID in 20 g Sulfolan vor und tropft innerhalb von 60 Minuten die Lösung von PMDA in der Mischung aus Chlorbenzol und dem restlichen Sulfolan zu, während gleichzeitig Stickstoff eingeleitet wird. Nach beendeter Zugabe erhöht man die Innentemperatur auf 185 °C und läßt 6 Stunden reagieren. Während der PMDA-Zugabe und der Reaktionsphase bei 185 °C beobachtet man das Abdestillieren des Chlorbenzol/Wasser-Azeotrops, bis schließlich reines Chlorbenzol übergeht.

Nach Abschluß der Polykondensation gießt man die abgekühlte Reaktionsmischung in 300 ml Methanol. Der Niederschlag wird abgesaugt, mit Methanol gewaschen und anschließend im Vakuum bei 100 °C getrocknet.

| | | |
|---|---|---|
| Ausbeute | = 28,8 g | |
| $M_n$ | = 6 500 | GPC-Analyse |
| $M_w$ | = 20 000 | GPC-Analyse |
| IR-Spektrum | = 1 780 und 1 725 $cm^{-1}$ (Imid + Ester) | |
| | 1 390, 1 370, 1 235 und 730 $cm^{-1}$ | |

Beispiel 3

Einsatzstoffe: 19,1 g BHID
15,75 g PMDA
120 g Sulfolan
30 g Chlorbenzol

Durchführung:

Unter Stickstoff wird die Lösung von BHID in Sulfolan und Chlorbenzol auf 165 °C aufgeheizt und danach portionsweise innerhalb eines Zeitraums von 2 Stunden mit fester PMDA versetzt. Nach beendeter PMDA-Zugabe erhöht man die Reaktionstemperatur auf 185 °C und läßt 4 Stunden reagieren. Die Aufarbeitung erfolgt analog zu Beispiel 1.

| | | |
|---|---|---|
| Ausbeute | = 29,2 g | |
| $M_n$ | = 11 500 | GPC-Analyse |
| $M_w$ | = 35 100 | GPC-Analyse |
| IR-Spektrum | : wie Beispiel 1 | |

Beispiel 4

Einsatzstoffe: 18,2 g BHID
15,75 g PMDA
150 g Nitrobenzol

Durchführung:

Das in Nitrobenzol gelöste PMDA wird innerhalb von 60 Minuten zur bei 220 °C unter Stickstoff gerührten Schmelze des BHID getropft. Anschließend läßt man bei 220 °C 2 Stunden nachreagieren. Die Aufarbeitung erfolgt analog zu Beispiel 1.

| | | |
|---|---|---|
| Ausbeute | = 29,1 g | |
| $M_n$ | = 13 100 | GPC-Analyse |
| $M_w$ | = 40 600 | GPC-Analyse |
| IR-Spektrum | : wie Beispiel 1 | |

Beispiel 5

Einsatzstoffe: 18,2 g BHID
15,75 g PMDA
135 g Diphenylsulfon
15 g Diphenylether

Durchführung:

Zu der Mischung aus BHID, Diphenylsulfon und Diphenylether unter Stickstoff bei 250 °C setzt man unter Rühren portionsweise innerhalb von 60 Minuten PMDA zu. Nach 2 Stunden Nachreaktion bei der gleichen Temperatur läßt man die Mischung auf 200 °C abkühlen und verdünnt den Ansatz mit 200 g NMP. Die auf Raumtemperatur abgekühlte Mischung rührt man anschließend in 500 g Methanol ein, saugt den Niederschlag ab und extrahiert das Produkt mit 500 g siedendem Aceton. Danach wird das Produkt erneut abgesaugt, mit Methanol gewaschen und anschließend im Vakuum getrocknet.

| | | |
|---|---|---|
| Ausbeute | = 28,5 g | |
| $M_n$ | = 12 500 | GPC-Analyse |
| $M_w$ | = 38 700 | GPC-Analyse |

| | | | | | |
|---|---|---|---|---|---|
| Elementaranalyse | gef.: | 60,5 % C | 3,45 % H | 29,2 % O | 6,8 % N |
| | ber.: | 60,8 % C | 3,2 % H | 29,5 % O | 6,5 % N |

IR-Spektrum : wie Beispiel 1

Beispiel 6

Einsatzstoffe: 12 g BHID
7,1 g N,N'-Bis(2-hydroxyethyl)terephthalsäurediamid (BHTD)
16,2 g PMDA
310 g Nitrobenzol

Durchführung:

Zu einer bei 220 °C unter Stickstoff gerührten Mischung aus BHID und BHTD in 190 g Nitrobenzol wird innerhalb von 60 Minuten die Lösung von PMDA in 120 g Nitrobenzol getropft, wobei 130 ml Destillat übergehen. Anschließend senkt man die Reaktionstemperatur auf 200 °C und läßt 4 Stunden nachreagieren. Die Aufarbeitung erfolgt analog zu Beispiel 1.

| | | |
|---|---|---|
| Ausbeute | = 29,4 g | |
| $M_n$ | = 11 300 | GPC-Analyse |
| $M_w$ | = 36 100 | GPC-Analyse. |

IR-Spektrum : 1 780 und 1 725 $cm^{-1}$ (Imid + Ester)
1 390, 1 375, 1 280, 1 240 745 und 715 $cm^{-1}$

Beispiel 7

Einsatzstoffe: 9,1 g BHID
7,9 g PMDA
100 g Sulfolan

Durchführung:

Zu der bei 80 °C gerührten Lösung von BHID in Sulfolan wird innerhalb von 120 Minuten portionsweise PMDA (fest) zugesetzt, während gleichzeitig 20 l/h Stickstoff eingeleitet werden. Nach der Zugabe und 4 Stunden Nachreaktion ist eine hochviskose Masse entstanden. Eine durch Fällung isolierte Probe zeigt die Bildung eines Polymeren mit Amid-, Ester-und Säure-Funktionen (Imid-Gruppen sind nicht nachzuweisen). Anschließend wird die Reaktionsmischung auf 200 °C erhitzt und 4 Stunden bei dieser Temperatur nachgerührt. Die Aufarbeitung erfolgt analog zu Beispiel 1.

| | | |
|---|---|---|
| Ausbeute | = 14,3 g | |
| $M_n$ | = 9 400 | GPC-Analyse |
| $M_w$ | = 29 800 | GPC-Analyse |
| IR-Spektrum | : wie Beispiel 1 | |

Beispiel 8

Einsatzstoffe:9,1 g BHID
7,9 g PMDA
0,05 g 4-Dimethylaminopyridin
100 g Sulfolan

Die Durchführung erfolgt, wie in Beispiel 6 beschrieben. Bereits nach Beendigung der PMDA-Zugabe ist die Viskosität der Reaktionsmischung stark angestiegen. Eine durch Fällung isolierte Probe zeigt die Bildung eines Polymeren mit Amid-, Ester-und Säure-Funktionen (Imid-Gruppen sind nicht nachzuweisen). Anschließend wird die Reaktionsmischung auf 200 °C erhitzt und 4 Stunden bei dieser Temperatur nachgerührt. Die Aufarbeitung erfolgt analog zu Beispiel 1.

| | | |
|---|---|---|
| Ausbeute | = 14,5 g | |
| $M_n$ | = 10 800 | GPC-Analyse |
| $M_w$ | = 31 200 | GPC-Analyse |

IR-Spektrum : wie Beispiel 1

Beispiel 9

Einsatzstoffe: 18,2 g BHTD
37,4 g 2,2-Bis-/4-(3,4-anhydrodicarboxyphenoxy)phenyl/propan
200 g Sulfolan
30 g Chlorbenzol

Die Durchführung erfolgt, wie im Beispiel 1 beschrieben.

| | | |
|---|---|---|
| Ausbeute | = 49,3 g | |
| $M_n$ | = 15 700 | GPC-Analyse |
| $M_w$ | = 54 900 | GPC-Analyse |

IR-Spektrum 1 775 und 1 725 $cm^{-1}$ (Imid + Ester)

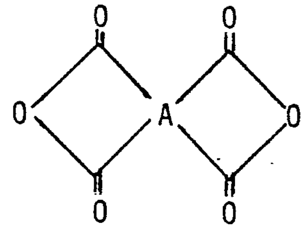

(II)

+ HO - Z - NH - CO - B - CO - NH - Z - OH

(III)

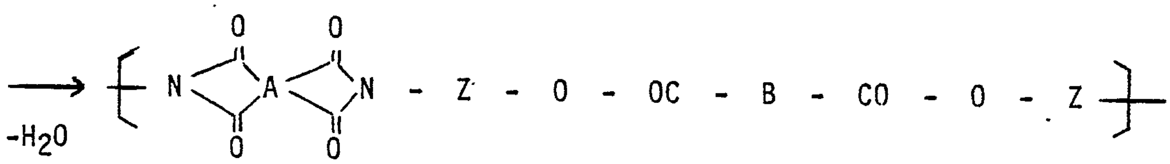


(I)

n,

II + $HO - Z - NH_2$

(IV)

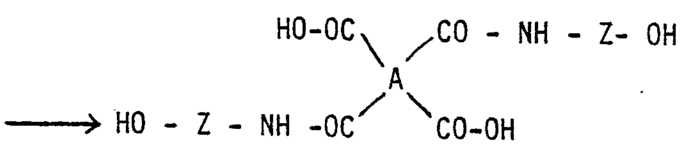

(V)

V + $Cl - CO - B - CO - Cl$

(VI)

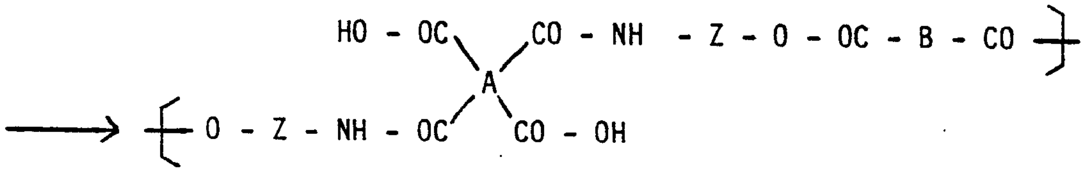

(VII)

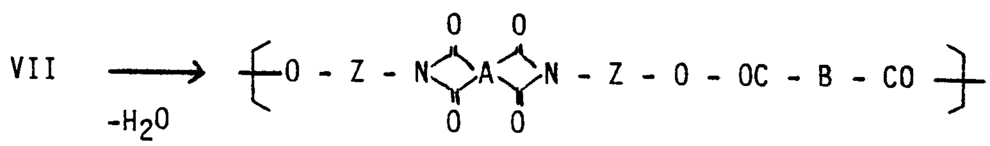


(VIII)

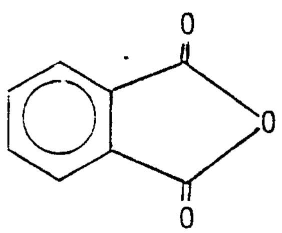 + $HO - (CH_2)_2 - NH - CO - R$

(IX)

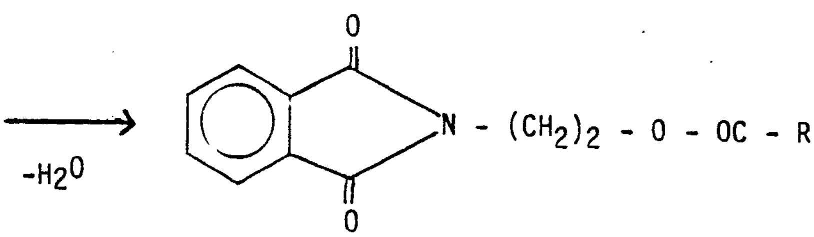


(X)

**Ansprüche**

1. Verfahren zur Herstellung von Polyesterimiden der allgemeinen Formel I

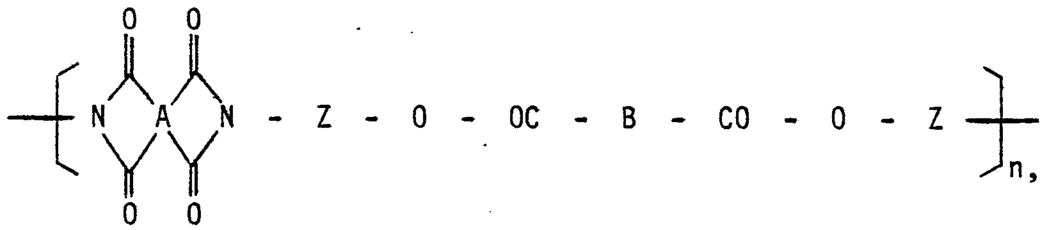

wobei
A einen vierwertigen aromatischen Rest mit 6 bis 32 C-Atomen bedeutet und bis zu 40 % durch einen vierwertigen aliphatischen Rest mit bis zu 16 C-Atomen ersetzt sein kann,
B einen zweiwertigen aliphatischen oder aromatischen Rest mit bis zu 14 C-Atomen bedeutet,
Z einen Alkylenrest mit 2 bis 3 C-Atomen bedeutet und
n eine Zahl zwischen 3 und 500, vorzugsweise 10 und 200,ist.
dadurch gekennzeichnet, daß man Tetracarbonsäuredianhydride der Formel II

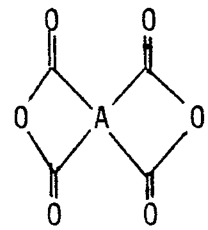

mit N,N'-Bis (Omega-hydroxyalkyl)dicarbonsäurediamiden der Formel
HO -Z -NH -CO -B - CO -NH -Z -OH (III)
unter Entfernung des sich bildenden Reaktionswassers so umsetzt, daß die Reaktionsmperatur zumindest gegen Ende der Reaktion zwischen 150 und 300 °C liegt und wobei A, B, und Z die bereits aufgeführten Bedeutungen haben.

2. Verfahren nach Anspruch 1,
dadurch gekennzeichnet,
daß man die Verbindung II und III zunächst bei Temperaturen unter 150 °C, bevorzugt bei 50 bis 120 °C, umsetzt und sodann unter Entfernung des sich bildenden Wassers die Reaktionstemperatur auf über 150 °C, bevorzugt 170 bis 300 °C, steigert.

3. Verfahren nach Anspruch 1,
dadurch gekennzeichnet,
daß man die Umsetzung oberhalb von 150 °C, bevorzugt bei 170 bis 300 °C, durchführt.

4. Verfahren nach den Ansprüchen 1 bis 3,
dadurch gekennzeichnet,
daß man die Umsetzung in Gegenwart von Katalysatoren durchführt.

5. Verfahren nach den Ansprüchen 1 bis 4,
dadurch gekennzeichnet,
daß man als Anhydride II Pyromellitsäuredianhydrid einsetzt.

6. Verfahren nach Ansprüchen 1 bis 5,
dadurch gekennzeichnet,
daß man als Diamide III N,N'-Bis-(2-hydroxyethyl)-isophthal-und/oder -terephthalsäurediamid einsetzt.

7. Verfahren nach den Ansprüchen 1 bis 6,
dadurch gekennzeichnet,
daß man die Reaktion unter Schutzgas, wie z. B. Stickstoff oder Argon, durchführt.

8. Verfahren nach den Ansprüchen 1 bis 7,
dadurch gekennzeichnet,
daß man die Reaktion in einem polaren Reaktionsmedium durchführt, das aus polaren aprotischen Lösemitteln oder deren Mischungen mit unpolaren organischen Lösemitteln besteht, wobei der Anteil der unpolaren Lösemittel maximal 80 Gewichtsprozent beträgt.

9. Verfahren nach den Ansprüchen 1 bis 8, dadurch gekennzeichnet, daß man das Polymere der Formel I durch Fällung und Zugabe eines Antilösemittels, wie z. B. Methanol oder Ethanol, isoliert.

10. Polyesterimide der Formel I, hergestellt nach den Ansprüchen 1 bis 9.